# EUROPEAN PATENT SPECIFICATION

(11) **EP 2 781 892 B1**
(45) Date of publication and mention of the grant of the patent: **05.12.2018**
(21) Application number: 12849868.0
(22) Date of filing: 26.10.2012
(51) Int. Cl.: G01F 1/00, G01F 15/06, G01F 15/075, H01M 8/0438, H01M 8/04746

(54) **GAS FLOW RATE DETECTION DEVICE AND GAS FLOW RATE DETECTION METHOD**
VORRICHTUNG ZUR GASSTROMRATENERKENNUNG UND VERFAHREN ZUR GASSTROMRATENERKENNUNG
DISPOSITIF DE DÉTECTION DE DÉBIT DE GAZ ET PROCÉDÉ DE DÉTECTION DE DÉBIT DE GAZ

(30) Priority: 17.11.2011 JP 2011251808; 10.04.2012 JP 2012089455
(43) Date of publication of application: 24.09.2014
(73) Proprietor: Panasonic Corporation, Osaka 571-8501 (JP)
(72) Inventor: YOKOHATA, Mitsuo, Osaka 540-6207 (JP); NAWA, Motoyuki, Osaka 540-6207 (JP)
(74) Representative: Schwabe - Sandmair - Marx
(86) International application number: PCT/JP2012/006883
(87) International publication number: WO 2013/073113

(56) References cited:
- EP-A1- 2 077 439
- EP-A1- 2 093 545
- EP-A1- 2 098 833
- EP-A1- 2 105 715
- DE-A1- 19 501 013
- JP-A- 2008 032 417
- JP-A- 2009 030 976
- JP-A- 2010 008 200

## Description

### Technical Field

The present invention relates to a gas flow detecting device and a gas flow detecting method.

### Background Art

At present, general gas customer homes are attached with gas meters for measuring gas flows (gas flow rates). As a conventional gas meter, there is known a gas meter device intended to determine a use state of a gas instrument (see e.g., Patent Literature 1). In the gas meter disclosed in Patent Literature 1, a gas flow value is measured at constant time intervals, and which of the gas instruments a change in the use state has occurred, is determined, based on a change amount of the measured gas flow value.

### Citation List

### Patent Literature

Patent Literature 1: Japanese Patent No. 4729971

EP 2 077 439 A1 discloses a flow rate measuring apparatus having a flow rate measurement unit that measures a flow rate at given time intervals; an appliance determination unit that calculates a flow difference between flow rates acquired at two arbitrary times by measuring the use of an appliance connected to a downstream point with reference to the flow rate measurement unit, thereby determining an operating appliance; and an appliance flow rate calculation unit that calculates the appliance-specific usage flow rate by switching a calculation method according to the number, types, combinations, and priority levels of currently-operating gas appliances that are results of determination made by the appliance determination unit.

### Summary of Invention

### Technical Problem

In the gas meter device disclosed in Patent Literature 1, which of the gas instruments a change in the use state has occurred, can be determined, but, a usage amount of the gas of a particular gas instrument cannot be detected. Especially, in a situation in which a plurality of gas instruments may be operating, a total usage amount of the gas of a particular gas instrument cannot be detected. Also, in recent general homes, a fuel cell system has been widely used as a kind of the gas instrument.

The present invention is directed to solving the above mentioned problem associated with prior arts, and an object of the present invention is to provide a gas flow detecting device and a gas flow detecting method, which are capable of determining an activated state of a particular gas instrument, especially, a fuel cell system, and calculating (detecting) a usage amount (total usage amount) of the gas of the particular gas instrument.

### Solution to Problem

To solve the above described problem, according to the present invention, there is provided a gas flow detecting method according to independent claim 1 and a gas flow detecting device according to independent claim 3.

### Advantageous Effects of Invention

In accordance with the gas flow measuring device and gas flow measuring method of the present invention, it becomes possible to calculate (detect) the usage amount (total usage amount) of the gas of the particular gas instrument, and provide new service such as setting of gas charges corresponding to the instruments.

### Brief Description of Drawings

[Fig. 1] Fig. 1 is a view showing a schematic configuration of a gas flow detecting device according to Embodiment 1.
[Fig. 2] Fig. 2 is a flowchart showing the operation of the gas flow detecting device according to Embodiment 1.
[Fig. 3A] Fig. 3A is a schematic view showing a concept of a gas flow detecting method according to Embodiment 1.
[Fig. 3B] Fig. 3B is a schematic view showing the concept of the gas flow detecting method according to Embodiment 1.
[Fig. 3C] Fig. 3C is a schematic view showing the concept of the gas flow detecting method according to Embodiment 1.
[Fig. 4A] Fig. 4A is a schematic view showing a concept of a gas flow detecting method according to Embodiment 2.
[Fig. 4B] Fig. 4B is a schematic view showing the concept of the gas flow detecting method according to Embodiment 2.
[Fig. 5] Fig. 5 is a schematic view showing a concept of a gas flow detecting method according to Embodiment 3.
[Fig. 6] Fig. 6 is a schematic view showing a concept of a gas flow detecting method according to Embodiment 4.
[Fig. 7] Fig. 7 is a schematic view showing the concept of the gas flow detecting method according to Embodiment 4.
[Fig. 8A] Fig. 8A is a flowchart schematically showing detailed updating of the gas flow in a fuel cell system in step S110 in the flowchart of Fig. 2.
[Fig. 8B] Fig. 8B is a flowchart schematically showing detailed updating of the gas flow in the fuel cell system in step S110 in the flowchart of Fig. 2.
[Fig. 9] Fig. 9 is a schematic view showing a concept of a gas flow detecting method according to modified example of Embodiment 4.
[Fig. 10A] Fig. 10A is a flowchart schematically showing detailed updating of the gas in the fuel cell system in step S110 in the flowchart of Fig. 2.
[Fig. 10B] Fig. 10B is a flowchart schematically showing detailed updating of the gas flow in the fuel cell system in step S110 in the flowchart of Fig. 2.

### Description of Embodiments

Hereinafter, embodiments of the present invention will be described specifically. Throughout the drawings, the same or corresponding components are identified by the same reference numerals and will not be descried in repetition. Throughout the drawings, the components required to describe the present invention are extracted and the other components are not shown. Furthermore, the present invention is not limited to the embodiments described below.

### (Embodiment 1)

A gas flow detecting device according to Embodiment 1 is a gas flow detecting device attached to a gas supply pipe, the gas flow detecting device comprising: a gas flow obtaining unit for obtaining a gas flow at first period intervals; and a control unit for calculating a total usage gas flow which is an integrated value of the usage gas flow of a particular gas instrument, based on the gas flow obtained by the gas flow obtaining unit.

The particular gas instrument is a gas instrument in which a usage amount of the gas changes very gradually at the start of its operation, during its operation and at the end of its operation.

### [Configuration of gas flow detecting device]

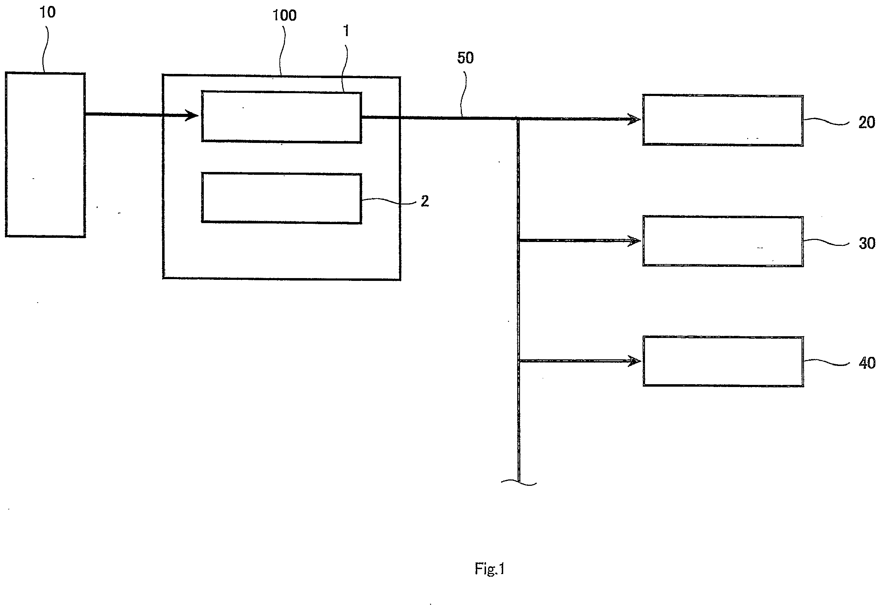

Fig. 1 is a view showing a schematic configuration of a gas flow detecting device according to Embodiment 1.

As shown in Fig. 1, a gas flow detecting device 100 according to Embodiment 1 includes a gas flow obtaining unit 1 and a control unit 2, and is attached to a gas supply pipe 50. The upstream end of the gas supply pipe 50 is connected to a gas supply source 10, while the downstream end thereof is connected to gas instruments such as a fuel cell system 20, a fan heater 30 and a gas range 40. As the gas supply source 10, for example, there is a gas supply pipe of a gas supply company.

The gas flow obtaining unit 1 may be configured any way so long as it is capable of obtaining a gas flow (gas flow rate) of a gas flowing through the gas supply pipe 50, and may be a flow detector which directly detects a gas flow. Or, the gas flow obtaining unit 1 may be configured to receive the gas flow detected by the flow detector to obtain the gas flow. As the flow detector, for example, an ultrasonic flow meter, a flow meter of a flow sensor type, etc., may be used.

The control unit 2 includes a storage means (storage module), a detection value obtaining means (detected value obtaining module), a determiner means (determiner module), and a time measuring means (time measuring module) (these are not shown). The control unit 2 may be constituted by a single controller which performs centralized control or may be a plurality of controllers which cooperate with each other to perform distributed control.

The control means may be configured any way so long as it has a control function, and may be, for example, a CPU, a microcontroller, a MPU, a PLC (programmable logic controller), a logic circuit, etc.. The storage means includes a memory or the like which contains programs used for executing control operations. The time measuring means may be configured any way so long as it has a time measuring function, and may be, for example, a clock circuit. The detection value obtaining means and the determiner means may be implemented by executing specified programs stored in the storage means.

### [Operation of gas flow detecting device (gas flow detecting method)]

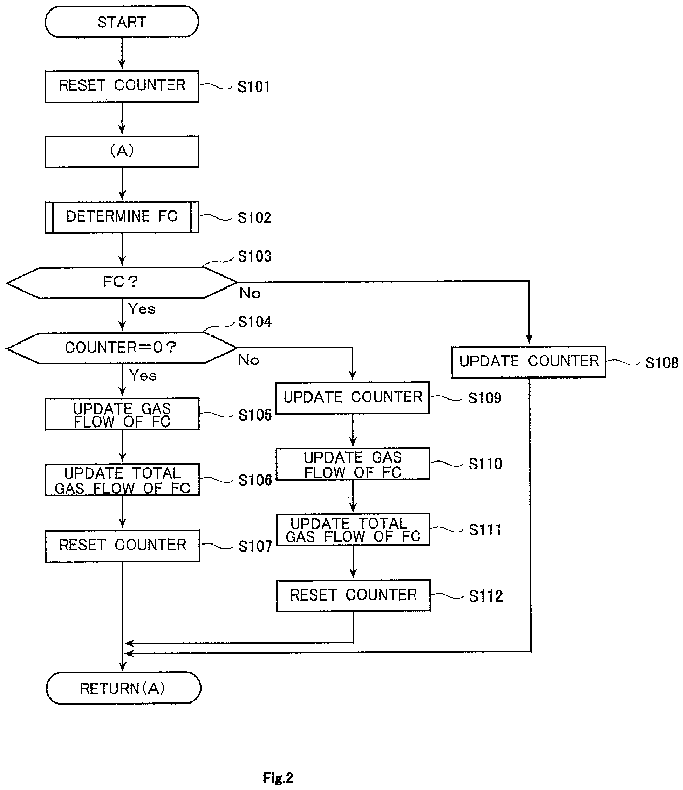

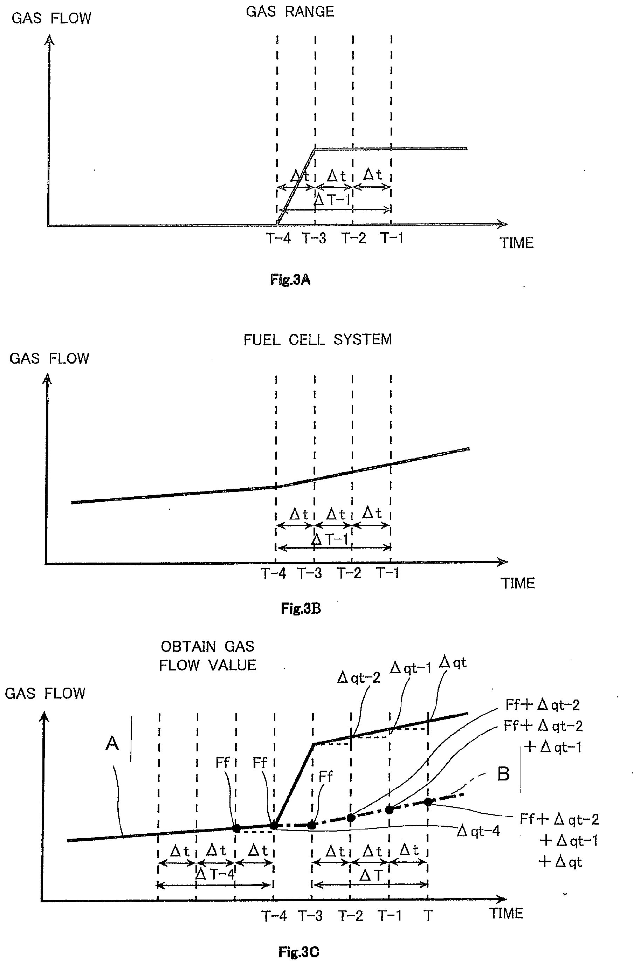

Fig. 2 is a flowchart showing the operation of the gas flow detecting device according to Embodiment 1. Figs. 3A to 3C are schematic views showing a concept of a gas flow detecting method according to Embodiment 1. For example, Figs. 3A to 3C illustrate a case where the gas range 40 of other gas instruments starts operation at specified time (time T-4) in a state in which only the fuel cell system 20 is operating. Specifically, Fig. 3A is a graph showing a change in a usage gas flow of the gas range, which occurs with time, Fig. 3B is a graph showing a change in a usage gas flow of the fuel cell system, which occurs with time, and Fig. 3C is a graph showing a change in a gas flow obtained by the gas flow obtaining unit, which occurs with time.

Fig. 3C is the graph showing a gas flow which is a sum of the gas flow of Fig. 3A and the gas flow of Fig. 3B. In Fig. 3C, a solid line indicates an actual gas flow obtained by the gas flow obtaining unit, while one-dotted line indicates a usage gas flow of the fuel cell system which is estimated by the gas flow detecting method according to Embodiment 1.

### [Detecting method of fuel cell system]

As shown in Fig. 3A, in the gas instrument such as the gas range 40 (gas instrument other than the fuel cell system 20), the usage gas flow changes relatively steeply with time, at the start of its operation and at the end of its operation. In contrast, during its operation, the usage gas flow changes relatively steeply or does not substantially change with time, during its operation. For example, in a case where a user adjusts heating power of the gas range 40, a case where a heat generation amount is adjusted according to a set temperature in the fan heater 30, etc., the usage gas flow increases or decreases significantly. However, in a steady state in which the heating power or the heat generation amount is not adjusted, the usage gas flow does not substantially change. On the other hand, as shown in Fig. 3B, the fuel cell system 20 has a feature that the usage gas flow changes very gradually with time, at the start of its operation, during its operation, and at the end of its operation.

This makes it possible to detect the activated state of the fuel cell system 20 operating together with other gas instruments, based on a difference in the change in the usage gas flow which occurs with time, between the fuel cell system 20 and other gas instruments. In the present embodiment, the specific content of the detecting method of the fuel cell system 20 (method of detecting whether or not the fuel cell system 20 is activated) is not particularly limited in detection of the gas flow. A suitable example will be described below. A description will be given of a case where this method is used to detect the fuel cell system 20, in the gas flow detecting method of the present embodiment.

Specifically, a change amount of the gas flow in a first period (Δt) is obtained every passage of the first period Δt and a change amount of the gas flow in a second period (ΔT (>Δt)) including a predetermined number of first periods is obtained. In the present embodiment, the second period ΔT is set to a period which is equal to three first periods Δt (i.e., ΔT = 3 × Δt). It is determined whether or not the change amount of the gas flow in the first period Δt falls within a first predetermined range (first determination process), and it is determined whether or not the change amount of the usage gas flow in the second period ΔT falls within a second predetermined range (second determination process).

When results of the first determination process regarding all of the first periods Δt included in the second period ΔT are "the change amount of the usage gas flow in the first period Δt falls within the first predetermined range" and a result of the second determination process regarding the second period ΔT is "the change amount of the usage gas flow in the second period ΔT falls within the second predetermined range", it is determined that the fuel cell system 20 is activated. In other words, it can be determined that the usage gas flow of the fuel cell system 20 can be obtained.

In other words, when it is determined that regarding at least one of the first periods Δt included in the second period ΔT, "the change amount of the usage gas flow in the first period Δt does not fall within the first predetermined range" or it is determined that regarding the second period ΔT, "the change amount of the usage gas flow in the second period ΔT does not fall within the second predetermined range", it is determined that the usage gas flow of the fuel cell system 20 cannot be obtained.

The phrase "the usage gas flow of the fuel cell system 20 can be obtained" means that a change (relative change amount) of the usage gas flow detected by the gas flow obtaining unit 1 in the second period ΔT can be assumed as the change amount (relative change amount) of the usage gas flow of the fuel cell system 20.

The first predetermined range and the second predetermined range can be found in advance by experiment, or the like, and are values which are smaller than the change amounts (especially change amounts at the start of the operation, at the end of the operation, at the adjustment of the gas flows) of the gas instrument such as the gas range 40.

The second determination process is performed every passage of the second period ΔT. As a setting method of the second period ΔT, the second period ΔT may be set to most recent three first periods Δt, every passage of the first period Δt. In this case, every passage of the first period Δt, the second determination process is substantially performed. Or, the second period ΔT may be set to most recent three first periods Δt every passage of the period (i.e., 3 × Δt) corresponding to the second period ΔT. In this case, every passage of the three first periods Δt, the second determination process is substantially performed. Hereinafter, a description will be given of the former method (the second period ΔT is set to most recent three first periods Δt every passage of the first period Δt).

### [Relation between change amount of usage gas flow and first predetermined range and second predetermined range]

Next, a description will be briefly given of a relation between the change amount of the usage gas flow at each time point and the first predetermined range and the second predetermined range, with reference to Figs. 3A to 3C.

Firstly, the gas range 40 of Fig. 3A will be described. A period from time T-4 to time T-3 is a period which passes from when the gas range 40 starts its operation until it reaches a steady operation. For this period, the usage gas flow increases rapidly. Therefore, in the first period Δt included in this period, the change amount of the usage gas flow of the gas range 40 exceeds the first predetermined range. Also, in the second period ΔT including this period, the change amount of the usage gas flow of the gas range 40 exceeds the second predetermined range. After time T-3, the operation of the gas range 40 becomes the steady state, and the change amount of the usage gas flow is almost zero.

The fuel cell system 20 of Fig. 3B will be described. The change amount of the usage gas flow of only the fuel cell system 20 increases a little after time T-4. In a first measurement period at any time point, the change amount of the usage gas flow falls within the first predetermined range, while in a second measurement period at any time point, the change amount of the usage gas flow falls within the second predetermined range.

A change in the gas flow of Fig. 3C will be described. The gas flow obtained by the gas flow obtaining unit 1 in the gas flow detecting device 100 is the sum of the gas flow of the gas range 40 of Fig. 3A and the gas flow of the fuel cell system 20 of Fig. 3B, as shown in the graph of Fig. 3C.

Therefore, as shown in Fig. 3C, the gas flow obtained by the gas flow obtaining unit 1 is such that the change amount in the first period Δt falls within the first predetermined range and the change amount in the second period ΔT falls within the second predetermined range, for a period until time T-4.

The relation with the first predetermined range after time T-4 is as follows. The change amount in the first period Δt exceeds the first predetermined range from time T-4 to time T-3. After time T-3, the change amount in the first period Δt falls within the first predetermined range again at any time point.

The relation with the second predetermined range after time T-4 is as follows. The change amount of the usage gas flow exceeds the second predetermined range, in the second period ΔT including the period from time T-4 to time T-3. That is, the second period ΔT in which time T-3, time T-2, and time T-1 are ending points includes an interval in which the usage gas flow changes rapidly, and therefore, the change amount of the usage gas flow exceeds the second predetermined range. In the second period ΔT after time T (i.e., second period ΔT in which time point after time T-3 is starting point), the change amount of the usage gas flow falls within the second predetermined range.

Then, in a case where the gas flow obtained by the gas flow obtaining unit 1 changes as shown in Fig. 3C, i.e., the fuel cell system 20 uses the gas as indicated by the usage gas flow of Fig. 3B and the gas range 40 is activated at time T-4 and uses the gas as indicated by the graph of Fig. 3A, the gas flow detecting device 100 of Embodiment 1 detects a total usage gas flow (estimated value) of the fuel cell system 20 as described below. Hereinafter, a description will be given of a case where the second period ΔT includes a plurality of successive first periods Δt (in the present embodiment, three first periods Δt).

### [Detecting method of total usage gas flow of fuel cell system]

Initially, a description will be given of a procedure for detecting the total usage gas flow of the fuel cell system 20 during the operation of at least the fuel cell system 20, and a state in which usage gas flows of the gas instruments other than the fuel cell system 20 do not change rapidly, i.e., the state before time T-4 in the example of Fig. 3C. This procedure corresponds to steps S101 to S107 in the flowchart of Fig. 2.

As shown in Fig. 2, the control unit 2 of the gas flow detecting device 100 resets a counter (step S101). Specifically, the control unit 2 sets the counter to zero. Then, the control unit 2 determines whether or not the fuel cell system 20 is activated (usage gas flow of the fuel cell system 20 can be obtained) (step S102). The control unit 2 may determine whether or not the fuel cell system 20 is activated, by the above described method (method using first determination process and second determination process), or other method.

It is supposed that in the present embodiment, the above described method is employed, and step S102 and the following steps are performed every passage of the first period Δt. When the control unit 2 determines that the fuel cell system 20 is activated (Yes in step S103), it moves to step S104. On the other hand, when the control unit 2 determines that the fuel cell system 20 is not activated (usage gas flow of the fuel cell system 20 cannot be obtained) (No in step S103), it moves to step S108.

In step S104, the control unit 2 determines whether or not the counter is zero. When the control unit 2 determines that the counter is zero (Yes in step S104), it moves to step S105. On the other hand, when the control unit 2 determines that the counter is not zero (No in step S104), it moves to step S109. In the initial execution of the present flow, the control unit 2 sets the counter to zero in step S101, and therefore moves to step S105.

In step S105, the control unit 2 updates the usage gas flow of the fuel cell system 20. Specifically, in a case where the control unit 2 updates the usage gas flow of the fuel cell system 20, the present usage gas flow Ff is a sum of the usage gas flow Ff updated previously and a change amount Δqt in a period from previous updating to present updating (second period as to which the control unit 2 determines that the usage gas flow of the fuel cell system 20 can be obtained). For example, regarding the usage gas flow at time T-4 of Fig. 3C, the updated usage gas flow Ff is (previously updated value Ff) + (change amount Δqt - 4).

Then, the control unit 2 updates the total usage gas flow of the fuel cell system 20 (step S106). Specifically, the control unit 2 adds the usage gas flow Ff calculated (updated) in step S105 to the total usage gas flow of the fuel cell system 20 obtained previously by integration (total usage gas flow updated previously). The "total usage gas flow updated previously" can be obtained by integrating all of the usage gas flows updated previously every time the present flow is executed. However, a method of obtaining the "total usage gas flow updated previously" is not limited to this, but another method may be used. After the control unit 2 updates the total usage gas flow of the fuel cell system 20, it resets the counter (sets the counter to zero: step S107), and returns to the steps of Fig. 2A.

The above described steps S102 to S107 are performed every passage of the first period Δt, while the fuel cell system 20 is activated (Yes in step S 103) and the counter is zero (Yes in step S104). For example, in the case of Fig. 3C, steps S102 to S107 are repeated until at least time T-4 comes. As a result of this, the usage gas flow of the fuel cell system 20 at time T-4 and the total usage gas flow for a period until time T-4, are obtained.

Next, a description will be given of a case where it is determined that the fuel cell system 20 is not activated in step S102. As described above, it is supposed that the gas range 20 starts to be activated at time T-4 of Fig. 3C. Then, the control unit 2 determines whether or not the fuel cell system 20 is activated at time T-3 (step S102). In this case, as shown in Fig. 3C, the change amount of the usage gas flow in the first period Δt just before time T-3 falls outside the first predetermined range, and the change amount of the usage gas flow in the second period ΔT falls outside the second predetermined range, it is determined that the usage gas flow of the fuel cell system 20 cannot be obtained. Therefore, as shown in Fig. 2, the control unit 2 moves from step S103 to step S108.

In step S108, the control unit 2 updates the counter. Specifically, the control unit 2 adds 1 to the counter. Since the counter was 0, it is changed to 1 at this time. Then, the control unit 2 returns to the steps of Fig. 2A.

As described above, the control unit 2 determines that the fuel cell system 20 is not activated at time T-3 (No in step S103), adds 1 to the counter (step S108) and returns to the determination process of step S102. At each of time T-2 and time T-1, which are subsequent to time T-3, the change amount of the usage gas flow in one first period Δt (period between time T-4 and time T-3) of the three first periods Δt falls outside the first predetermined range, and the change amount of the usage gas flow in the second period ΔT falls outside the second predetermined range. Therefore, the control unit 2 performs at time T-2 and time T-1, the processes (step S102, step S103, and step S108) which are similar to those at time T-3. Because of this, the counter has been updated three times at time T-1, and is 3. From time T-3 when the control unit 2 determines that the fuel cell system 200 is not activated in step S102 to time T-1, the control unit 2 does not update the usage gas flow of the fuel cell system 20 and does not update the total usage gas flow of the fuel cell system 20.

Next, a description will be given of a case where the control unit 2 determines that the fuel cell system 200 is not activated in step S102, and thereafter determines that the fuel cell system 200 is activated. In this case, since the counter is 1 or more as described above, the control unit 2 performs step S102 to step S104 and then step S109 to step S112.

Specifically, as described above, when the control unit 2 performs the present flow at time T, the change amount of the usage gas flow in each of the three first periods Δt falls within the first predetermined range, and the change amount of the usage gas flow in the second period ΔT falls within the second predetermined range, at time T (see Fig. 3C). Therefore, the control unit 2 determines that the fuel cell system 20 is activated in step S102 (the usage gas flow of the fuel cell system 20 can be obtained), and moves from step S103 to step S104.

In step S104, the counter is 3, and therefore the control unit 2 moves to step S109. In step S109, the control unit 2 updates the counter. Specifically, the control unit 2 adds 1 to the counter. Since the counter was 3, it becomes 4.

Then, the control unit 2 updates the usage gas flow of the fuel cell system 20 (step S110). In a stage before step S110 at time T, as should be understood from the above, the usage gas flow of the fuel cell system 20 at time T-4 and the total usage gas flow for a period until time T-4 have been obtained, and the usage gas flows and the like at time T-3, time T-2, and time T-1 are not obtained yet.

On the other hand, the control unit 2 determines that the usage gas flow of the fuel cell system 20 in the second period ΔT (time T-2, time T-1, and time T) at time T can be obtained. Therefore, if the usage gas flow of the fuel cell system 20 at time T-3 can be obtained, then the usage gas flow of the fuel cell system 20 in the second period ΔT at time T can be calculated.

Accordingly, the control unit 2 updates the most recently updated value (in this example, usage gas flow Ff at time T-4) of the usage gas flow of the fuel cell system 20, as the usage gas flow of the fuel cell system 20 in a period (in this example, time T-3) in which the usage gas flow of the fuel cell system 20 cannot be obtained.

The control unit 2 calculates the usage gas flow of the fuel cell system 20 at time T-2, time T-1, and time T as described below, based on the above described usage gas flow of the fuel cell system 20 updated at time T-3. Specifically, the usage gas flow Ff of the fuel cell system 20 at time T-2, is a sum of the usage gas flow Ff of the fuel cell system 20 at time T-3, and a change amount (in this example, Δqt -2) of the gas flow obtained by the gas flow obtaining unit 1 from time T-3 to time T-2.

Likewise, the usage gas flow Ff of the fuel cell system 20 at time T-1, is a sum of the usage gas flow Ff of the fuel cell system 20 at time T-3, and a change amount (in this example, (Δqt - 2) + (Δqt - 1) of the gas flow obtained by the gas flow obtaining unit 1 from time T-3 to time T-1.

Also, the usage gas flow Ff of the fuel cell system 20 at time T, is a sum of the usage gas flow Ff of the fuel cell system 20 at time T-3, and a change amount (in this example, (Δqt - 2) + (Δqt - 1) + Δqt)) of the gas flow obtained by the gas flow obtaining unit 1 from time T-3 to time T1.

Then, the control unit 2 updates the total usage gas flow of the fuel cell system 20 (step S111). Specifically, the control unit 2 sums up (integrates) the usage gas flows of the fuel cell system 20 at time points from time T-3 to time T calculated in step S110 to update the total usage gas flow of the fuel cell system 20 at time T. Then, the control unit 2 resets the counter (step S112) and returns to step of Fig. 2A.

As described above, in the gas flow detecting device 100 of Embodiment 1, the control unit 2 determines whether or not the fuel cell system 20 is activated, and updates the usage gas flow of the fuel cell system 20 based on a result of the determination, thereby detecting the total usage gas flow of the fuel cell system 20.

As should be understood from above, to execute the calculation method of the total usage gas flow described in Embodiment 1, the gas flow detecting device 100 stores at least the usage gas flow and total usage gas flow of the fuel cell system 20 which are updated most recently before the present time, until the time point when they are updated next. If the control unit 2 determines that the usage gas flow of the fuel cell system 20 cannot be obtained in step S102, the gas flow detecting device 100 stores the value (change amount of gas flow (or relative value of gas flow) in the present embodiment) detected by the gas flow obtaining unit 1 at time when the determination is performed.

Although in the above case, the period (period from time T-4 to time T-3) in which the usage gas flow of the fuel cell system 20 cannot be obtained matches the first period Δt, the present invention is not limited to this. The present invention is applicable to a case where the period is shorter or longer than the first period Δt. Although in the present embodiment, the gas flow detected by the gas flow obtaining unit 1 during this period changes monotonously (see Fig. 3C), the present invention is not limited to this. For example, in a case where the user adjusts the heating power of the gas range 40 at the same time that the gas range 40 starts its operation, the gas flow may increase or decrease many times in repetition. Even in such a case, the estimated value of the usage gas flow of the fuel cell system 20 and the estimated value of the total usage gas flow of the fuel cell system 20 can be obtained using the above described method.

Although in Embodiment 1, the second period ΔT includes a plurality of successive first periods Δt and the determination in step S102 of Fig. 2 is performed in every first period Δt, the present invention is not limited to this. For example, the second period ΔT may include a plurality of first periods Δt, and the determination in step S102 of Fig. 2 may be performed in every second period ΔT. Nonetheless, if the determination in step S102 of Fig. 2 is performed in every first period Δt, it becomes possible to more precisely extract the period in which the usage gas flow of the fuel cell system 20 cannot be obtained. Therefore, accuracy of the obtained value of the usage gas flow of the fuel cell system 20 and the obtained value of the total usage gas flow of the fuel cell system 20 can be improved.

### (Embodiment 2)

### [Operation of gas flow detecting device (gas flow detecting method)]

The gas flow detecting device 100 according to Embodiment 2 has basically the same configuration as that of the gas flow detecting device 100 according to Embodiment 1. Therefore, a detailed description of the gas flow detecting device 100 according to Embodiment 2 will not be given. The operation (gas flow detecting method) of the gas flow detecting device according to Embodiment 2 is performed as in the flowchart of Fig. 2, but is different in updating of the gas flow in the fuel cell system 20 in step S110 as will be described below. Regarding operation described below, a description will be given of the case where the second period ΔT includes a plurality of successive first periods Δt as in Embodiment 1.

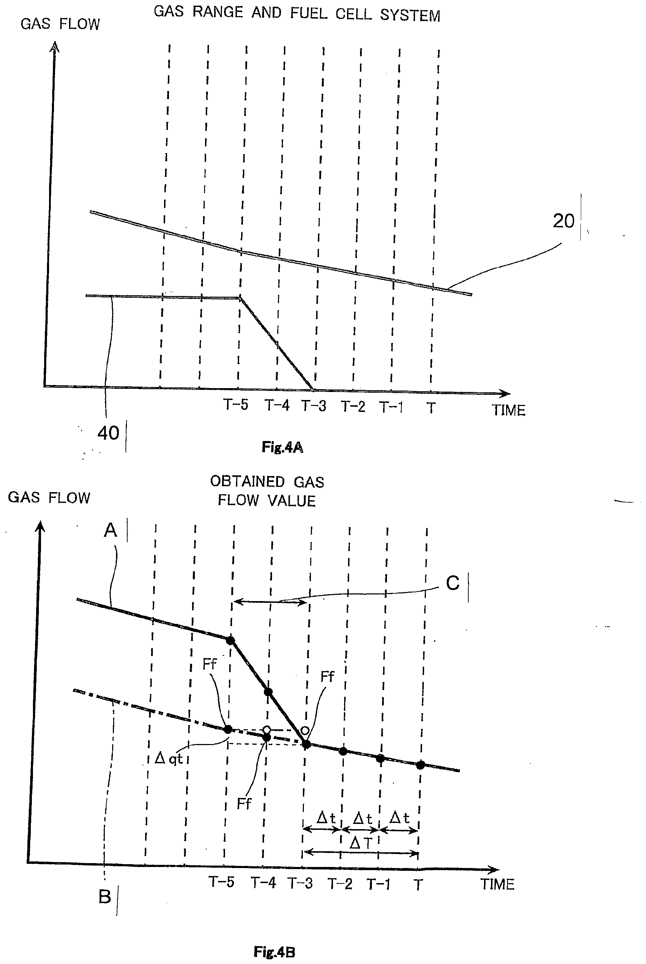

Figs. 4A and 4B are schematic views showing a concept of the gas flow detecting method according to Embodiment 2. Specifically, Fig. 4A is a graph showing a change in the usage gas flow of the gas range or the fuel cell system, which occurs with time, while Fig. 4B is a graph showing a change in the gas flow obtained by the gas flow obtaining unit, which occurs with time. Fig. 4B is a graph showing the usage gas flow which is a sum of the usage gas flow of the gas range of Fig. 4A and the usage gas flow of the fuel cell system. A solid line indicates the gas flow obtained by the gas flow obtaining unit, while one-dotted line indicates the estimated usage gas flow of the fuel cell system.

As shown in Fig. 4A, it is supposed that the gas range 40 and the fuel cell system 20 are activated and are consuming the gas. It is also supposed that the gas range 40 starts its deactivation operation at time T-5 and is deactivated at time T-3.

In such a case, at time T-5, the control unit 2 calculates the usage gas flow of the fuel cell system 20 and the total usage gas flow of the fuel cell system 20, by performing step S101 to step S107 of Fig. 2. Since the usage gas flow of the fuel cell system 20 cannot be obtained from time T-4 to time T-1, the control unit 2 repeats step S102, step S103, and step S108.

Then, at time T, the control unit 2 determines that the fuel cell system 20 is activated, in step S102. At this time, it is supposed that the control unit 2 determines that other gas instrument (e.g., fan heater 30) is not consuming the gas. The determination that the only the fuel cell system 20 is activated can be performed by executing a specified program. For example, the determination that the only the fuel cell system 20 is activated may be performed by the method disclosed in Japanese Laid-Open Patent Application Publication NO. 2006-313114 or the method disclosed in Japanese Laid-Open Patent Application Publication NO. 2008-309498.

Then, the control unit 2 performs step S103, step S104, and step S109, and moves to step S110. In step S110, the control unit 2 updates the usage gas flow of the fuel cell system 20.

If the usage gas flow of the fuel cell system 20 (in this example, usage gas flow Ff at time T-5) updated just before the control unit 2 determines that the usage gas flow of the fuel cell system 20 cannot be obtained, as the usage gas flow of the fuel cell system 20 in the period (time T-4 and time T-3) in which the usage gas flow cannot be obtained, as in Embodiment 1, then the usage gas flow of the fuel cell system 20 in the period (time T-4 and time T-3) in which the usage gas flow cannot be obtained is indicated by two-dotted line (while circle) of Fig. 4B. That is, the usage gas flow (in this example, usage gas flow Ff at time T-5; deemed usage gas flow) deemed as the usage gas flow of the fuel cell system 20 at time T-3, in the period (time T-4 and time T-3) in which the usage gas flow cannot be obtained, is greater than the gas flow obtained by the gas flow obtaining unit 1. As should be understood from this, when only the gas flow detecting method of Embodiment 1 is used, there is a possibility of an error.

In light of this, in the gas flow detecting method of Embodiment 2, the control unit 2 calculates the usage gas flow of the fuel cell system 20 in the period (time T-4 and time T-3) in which the usage gas flow cannot be obtained, as described below. Specifically, the control unit 2 calculates the usage gas flow of the fuel cell system 20, based on the deemed usage gas flow (usage gas flow Ff at time T-5), and a change amount between the deemed usage gas flow and a smallest gas flow of gas flows obtained by the gas flow obtaining unit 1, in the period (time T-4 and time T-3) in which the usage gas flow cannot be obtained.

Specifically, the control unit 2 calculates the usage gas flow Ff at time T-4, based on the usage gas flow Ff of the fuel cell system 20 at time T-5, and a change amount (Δqt/2Δt) between the usage gas flow Ff of the fuel cell system 20 at time T-5 and the gas flow obtained by the gas flow obtaining unit 1 at time T-3. In more detail, the usage gas flow Ff at time T-4 is a value derived by adding {(Δqt/2Δt) × Δt} to the usage gas flow Ff of the fuel cell system 20 at time T-5. In the same manner, the usage gas flow Ff at time T-3 is a value derived by adding {(Δqt/2Δt) × 2Δt} to the usage gas flow Ff of the fuel cell system 20 at time T-5.

The calculated usage gas flow of the fuel cell system 20 in the period (time T-4 and time T-3) in which the usage gas flow cannot be obtained has a small error, as shown in Fig. 4B. Then, the control unit 2 updates the total usage gas flow of the fuel cell system 20, based on the usage gas flow of the fuel cell system 20 in the period in which the usage gas flow cannot be obtained, which is calculated by the method of Embodiment 2 (step S111). It should be noted that the usage gas flow of the fuel cell system 20 from time T-3 to time T can be found as in Embodiment 1.

As described above, the gas flow detecting device 100 according to Embodiment 2 is capable of calculating the total usage gas flow of the fuel cell system 20 more accurately than the gas flow detecting device 100 according to Embodiment 1.

### (Embodiment 3)

### [Operation of gas flow detecting device (gas flow detecting method)]

The gas flow detecting device 100 according to Embodiment 3 has basically the same configuration as that of the gas flow detecting device 100 according to Embodiment 1. Therefore, a detailed description of the gas flow detecting device 100 according to Embodiment 3 will not be given. The operation (gas flow detecting method) of the gas flow detecting device 100 according to Embodiment 3 is performed as in the flowchart of Fig. 2, but is different in updating of the gas flow in the fuel cell system 20 in step S110 as will be described below. Regarding operation described below, a description will be given of the case where the second period ΔT includes a plurality of successive first periods Δt as in Embodiment 1.

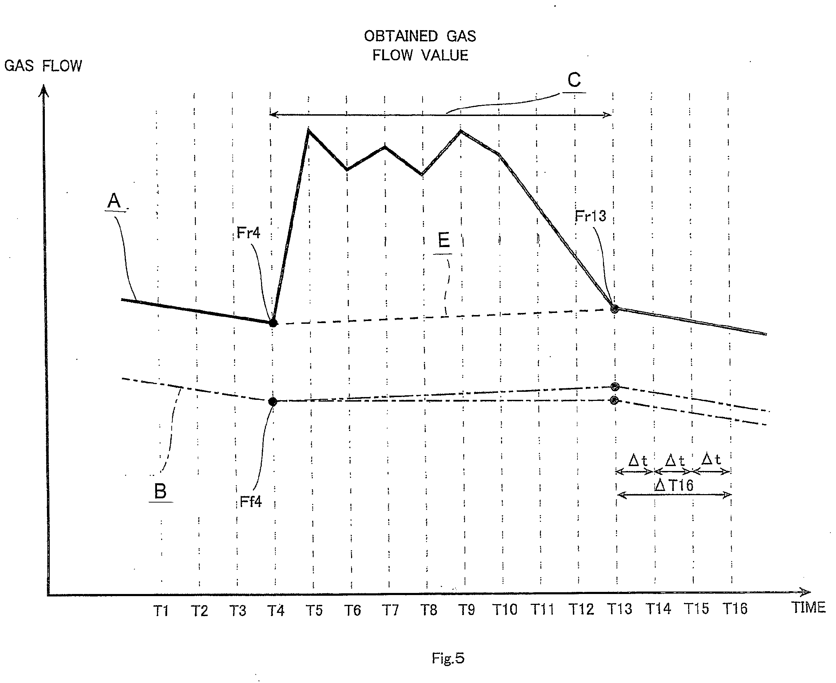

Fig. 5 is a schematic view showing a concept of the gas flow detecting method according to Embodiment 3. Specifically, Fig. 5 is a graph showing a change in the gas flow obtained by the gas flow obtaining unit, which occurs with time. In Fig. 5, a solid line indicates the gas flow obtained by the gas flow obtaining unit, while one-dotted line and two-dotted line indicate the estimated usage gas flows of the fuel cell system. More specifically, one-dotted line indicates the estimated usage gas flow calculated by the gas flow detecting method of Embodiment 1, while two-dotted line indicates the estimated usage gas flow calculated by the gas flow detecting method of Embodiment 3.

As shown in Fig. 5, it is supposed that a hot-water supply unit (not shown in Fig. 1) or the fuel cell system 20 is activated and is consuming the gas. It is also supposed that the hot-water supply unit starts its operation at time T4 and is deactivated at time T13.

In such a case, at time T4, the control unit 2 calculates the usage gas flow of the fuel cell system 20 and the total usage gas flow of the fuel cell system 20, by performing step S101 to step S107 of Fig. 2. Since the usage gas flow of the fuel cell system 20 cannot be obtained from time T5 to time T15, the control unit 2 repeats step S102, step S103, and step S108.

Then, at time T16, the control unit 2 determines that the fuel cell system 20 is activated, in step S102. Then, the control unit 2 performs step S103, step 104 and step S109, and moves to step S110. In step S110, the control unit 2 updates the usage gas flow of the fuel cell system 20.

If the usage gas flow of the fuel cell system 20 (in this example, usage gas flow Ff4 at time T4) updated just before the control unit 2 determines that the usage gas flow of the fuel cell system 20 cannot be obtained, as the usage gas flow of the fuel cell system 20 in the period (time T5 to time T13) in which the usage gas flow cannot be obtained, like Embodiment 1, the graph indicated by one-dotted line of Fig. 5 is derived.

As described above, the fuel cell system 20 has a feature that the usage gas flow changes very gradually with time, at the start of its operation, during its operation, and at the end of its operation (see Fig. 3B). Therefore, in the case where the period in which the usage gas flow cannot be obtained is a plurality of successive second periods, in the example of Fig. 5, and the first change amount which is a change amount between a gas flow Fr4 obtained by the gas flow obtaining unit 1 at a starting point (in this example, time T4) of the period in which the usage gas flow cannot be obtained and a gas flow Fr13 obtained by the gas flow obtaining unit 1 at time T13 which is an ending point of the period in which the usage gas flow cannot be obtained, falls within the predetermined range, the control unit 2 can estimate that the first change amount is the change amount of the usage gas flow of the fuel cell system 20.

The predetermined range can be found in advance by experiment, or the like, and is a value which is smaller than the change amount (especially change amount at the start of the operation, at the end of the operation, change amount at the adjustment of the gas flow) of the gas instrument such as the gas range 40.

In light of the above, in the gas flow detecting method of Embodiment 3, the control unit 2 calculates the usage gas flow of the fuel cell system 20 in the period (time T5 to time T13) in which the usage gas flow cannot be obtained, as will be described below. Specifically, the control unit 2 calculates the usage gas flow of the fuel cell system 200 based on the first change amount which is a change amount between the gas flow Fr4 obtained by the gas flow obtaining unit 1 at the starting point (in this example, time T4) of the period in which the usage gas flow cannot be obtained and the gas flow Fr13 obtained by the gas flow obtaining unit 1 at time T13 which is the ending point of the period in which the usage gas flow cannot be obtained, and the usage gas flow of the fuel cell system 20 (in this example, gas flow Ff4 at time T4) updated just before the control unit 2 determines that the usage gas flow of the fuel cell system 20 cannot be obtained.

Specifically, for example, the control unit 2 calculates the usage gas flow Ff at time T5 based on the usage gas flow Ff4 of the fuel cell system 20 at time T4 and the first change amount {(Fr13 - Fr4)/9Δt)}. In more detail, the usage gas flow Ff at time T5 is a value which is a sum of the usage gas flow Ff4 of the fuel cell system 20 at time T4 and [{(Fr13 - Fr4) /9Δt} × Δt]. In the same manner, the control unit 2 calculates the usage gas flows at time T6 to time T13.

Then, the control unit 2 updates the total usage gas flow of the fuel cell system 20, based on the usage gas flow of the fuel cell system 20 in the period in which the usage gas flow cannot be obtained, which is calculated by the method of Embodiment 3 (step S111). It should be noted that the usage gas flow of the fuel cell system 20 from time T14 to time T16 can be performed as in Embodiment 1.

In contrast, as will be described later, in a case where the period in which the usage gas flow cannot be obtained is a plurality of successive second periods and the first change amount falls outside the predetermined range, it is estimated that there is a change in the usage gas flow of the gas instrument other than the fuel cell system 20, in addition to a change in the usage gas flow of the fuel cell system 20.

In light of this, in a case where the first change amount falls outside the predetermined range, and the gas flow obtained by the gas flow obtaining unit 1 in the period in which the usage gas flow of the fuel cell system 20 cannot be obtained is greater than the usage gas flow of the fuel cell system 20 which is updated just before the period in which the usage gas flow of the fuel cell system 20 cannot be obtained, the control unit 2 deems the usage gas flow of the fuel cell system 20 which is updated just before the period in which the usage gas flow of the fuel cell system 20 cannot be obtained, as the usage gas flow of the fuel cell system 20 in the period in which the usage gas flow cannot be obtained, as in Embodiment 1. Also, in a case where the first change amount falls outside the predetermined range, and the gas flow obtained by the gas flow obtaining unit 1 in the period in which the usage gas flow of the fuel cell system 20 cannot be obtained, is equal to or less than the usage gas flow of the fuel cell system 20 which is updated just before the period in which the usage gas flow of the fuel cell system 20 cannot be obtained, the control unit 2 calculates the usage gas flow of the fuel cell system 20 in the period in which the usage gas flow of the fuel cell system 20 cannot be obtained, as in Embodiment 2.

The gas flow detecting device 100 according to Embodiment 3 configured as described above is capable of calculating the usage gas flow and total usage gas flow of the fuel cell system 20 more accurately.

### (Embodiment 4)

### [Operation of gas flow detecting device (gas flow detecting method)]

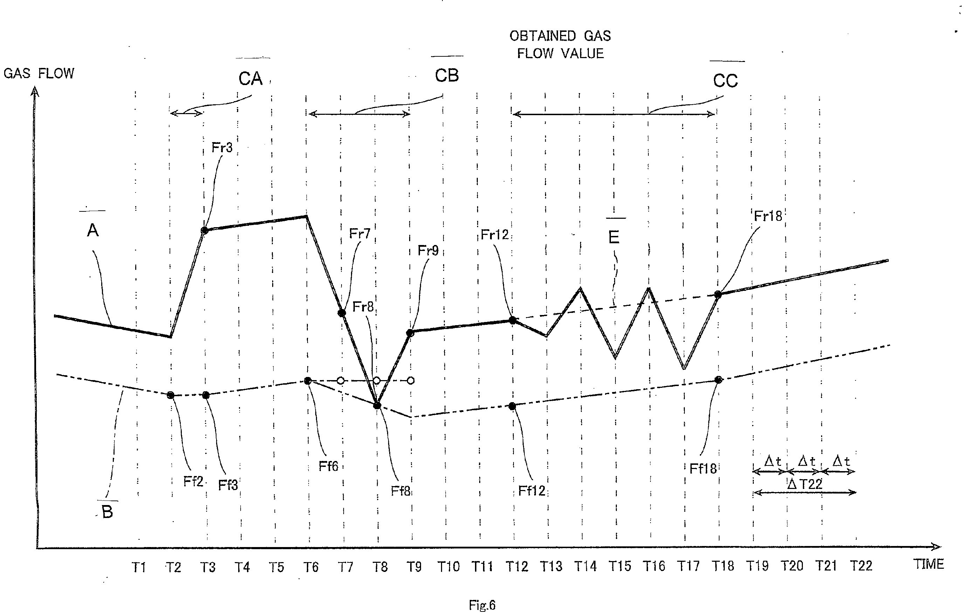

The gas flow detecting device 100 according to Embodiment 4 has basically the same configuration as that of the gas flow detecting device 100 according to Embodiment 1. Therefore, a detailed description of the gas flow detecting device 100 according to Embodiment 4 will not be given. The operation (gas flow detecting method) of the gas flow detecting device 100 according to Embodiment 4 is performed as in the flowchart of Fig. 2. Updating of the gas flow in the fuel cell system 20 in step S110 will be described in detail with reference to Figs. 6 to 8(B). Regarding operation described below, a description will be given of the case where the second period ΔT includes a plurality of successive first periods Δt as in Embodiment 1.

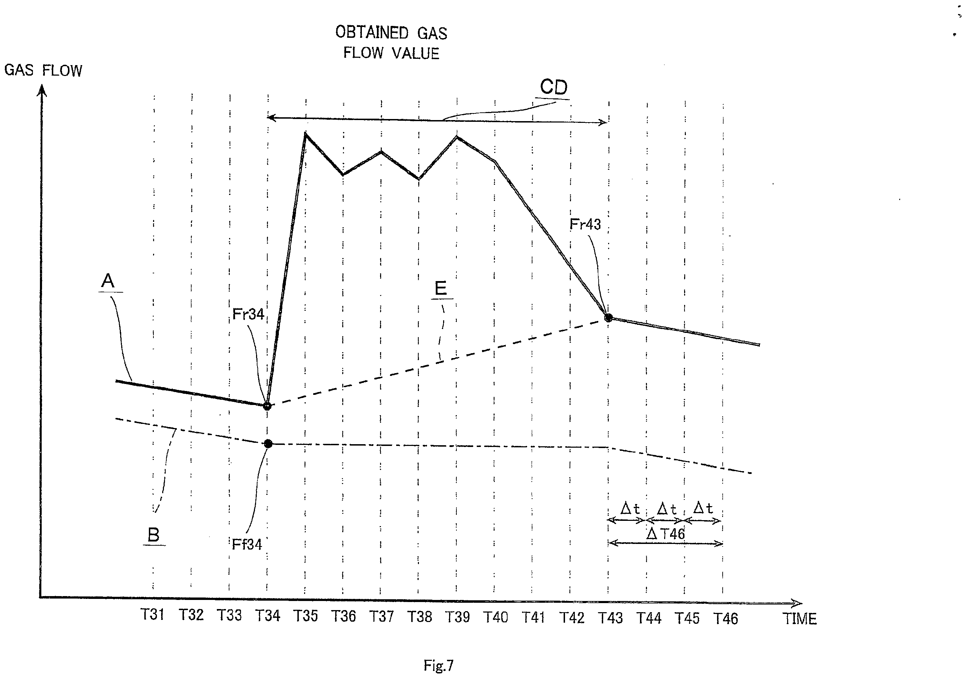

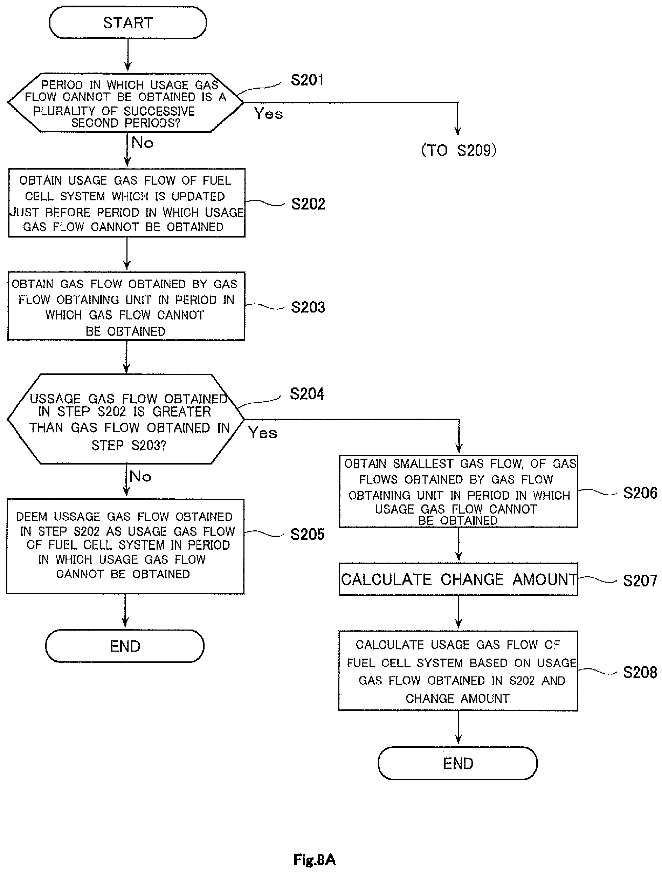

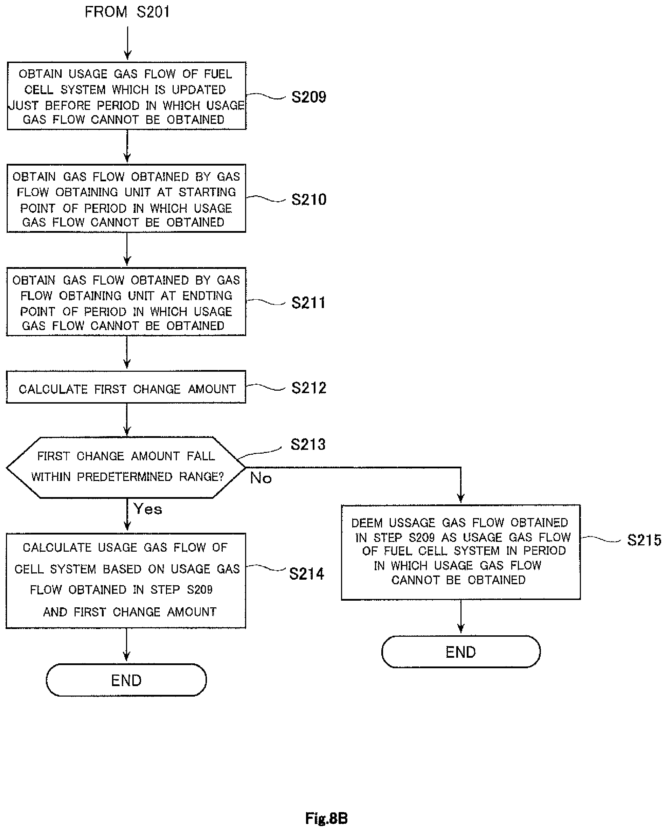

Figs. 6 and 7 are schematic views showing a concept of the gas flow detecting method according to Embodiment 4. Specifically, Figs. 6 and 7 are graphs each showing a change in the gas flow obtained by the gas flow obtaining unit, which occurs with time. Figs. 8A and 8B are flowcharts each schematically showing detailed updating of the gas flow in the fuel cell system in step S110 in the flowchart of Fig. 2.

In Fig. 6, a solid line indicates the gas flow obtained by the gas flow obtaining unit, while one-dotted line and two-dotted line indicate the estimated usage gas flows of the fuel cell system. More specifically, one-dotted line indicates the estimated usage gas flow calculated by the gas flow detecting method of Embodiment 1, while two-dotted line indicates the estimated usage gas flow newly calculated by the gas flow detecting method of Embodiment 1 to 3. In Fig. 7, a solid line indicates the gas flow obtained by the gas flow obtaining unit, while one-dotted line indicates the estimated usage gas flow of the fuel cell system.

Initially, Figs. 6 and 7 will be briefly described.

In Fig. 6, the control unit 2 determines that the fuel cell system 20 is activated at time T2, time T6, time T12, and time T21 (usage gas flow of the fuel cell system 20 can be obtained), and updates the usage gas flow of the fuel cell system 20. In this case, for example, at time T6, an estimated usage gas flow Ff2 of the fuel cell system 20 at time T2 is known. Also, at time T6, since a change amount of the usage gas flow in three first periods Δt just before time T6 falls within the first predetermined range, and a change amount of the usage gas flow in a second period ΔT6 (time T3 to time T6) falls within the second predetermined range, the control unit 2 decides the period A which is between time T2 and time T3 as the period in which the usage gas flow cannot be obtained. In the same manner, the control unit 2 decides the period B as the period in which the usage gas flow cannot be obtained, at time T12, and decides the period C as the period in which the usage gas flow cannot be obtained at time T21.

In the example of Fig. 7, the control unit 2 determines that the fuel cell system 20 is activated at time T34 and time T46 (usage gas flow of the fuel cell system 20 can be obtained), and updates the usage gas flow of the fuel cell system 20. In this case, for example, at time T43, an estimated usage gas flow Ff34 of the fuel cell system 20 at time T34 is known, and the control unit 2 decides the period D as the period in which the usage gas flow cannot be obtained.

Then, the control unit 2 updates the flow gas of the fuel cell system 20 in the period in which the usage gas flow cannot be obtained in such a manner that the control unit 2 updates (calculates) the usage gas flow of the fuel cell system 20 according to the flowchart of Fig, 8, in step S110 of the flowchart of Fig. 2. This will be described specifically with reference to Figs. 6 to 8(B)

### [Case of period A inwhich usage gas flow cannot be obtained]

Firstly, a case of the period A in which the usage gas flow cannot be obtained, in Fig. 6, will be described.

As shown in Fig. 8A, the control unit 2 determines whether or not the period in which the usage gas flow cannot be obtained is a plurality of successive second periods (step S201). When the control unit 2 determines that the period in which the usage gas flow cannot be obtained is the plurality of successive second periods (Yes in step S201), it moves to step S209. When the control unit 2 determines that the period in which the usage gas flow cannot be obtained is not the plurality of successive second periods (No in step S201), it moves to step S202. Step S209 and the following steps will be described later.

Since the period A in which the usage gas flow cannot be obtained is not the plurality of successive second periods, the control unit 2 moves to step S202. In step S202, the control unit 2 obtains the usage gas flow of the fuel cell system 20 which is updated just before the period in which the usage gas flow cannot be obtained. In this case, the control unit 2 obtains the usage gas flow Ff2 of the fuel cell system 20 which is updated just before the period A in which the usage gas flow cannot be obtained.

Then, the control unit 2 obtains a gas flow Fr3 obtained by the gas flow obtaining unit 1 in the period A in which the usage gas flow cannot be obtained (step S203). Then, the control unit 2 determines whether or not the usage gas flow Ff2 obtained in step S202 is greater than the gas flow Fr3 obtained in step S203 (step S204).

The control unit 2 determines that regarding the period A in which the usage gas flow cannot be obtained, the usage gas flow Ff2 obtained in step S202 is equal to or less than the usage gas flow Fr3 obtained in step S203 (No in step S204), and therefore moves to step S205.

In step S205, the control unit 2 deems the usage gas flow Ff2 obtained in step S202 as the usage gas flow of the fuel cell system 20 in the period A in which the usage gas flow cannot be obtained. That is, in a case where the gas flow Fr (in this example, gas flow Fr3) obtained by the gas flow obtaining unit 1 is greater than the usage gas flow Ff (in this example, usage gas flow Ff2) of the fuel cell system 20 which is updated just before the period in which the usage gas flow cannot be obtained, it may be estimated that the gas flow Fr obtained by the gas flow obtaining unit 1 includes the usage gas flow of the gas instrument other than the fuel cell system 20.

Therefore, the control unit 2 deems the usage gas flow Ff2 of the fuel cell system 20 which is updated just before the period A in which the usage gas flow cannot be obtained, as the usage gas flow of the fuel cell system 20 in the period A in which the usage gas flow cannot be obtained. The control unit 2 updates the usage gas flow of the fuel cell system 20 at time T3 assuming that the usage gas flow Ff3 is the usage gas flow Ff2, and terminates the present flow.

### [Case of period B in which usage gas flow cannot be obtained]

Next, a case of the period B in which the usage gas flow cannot be obtained, in Fig. 6, will be described.

Since the period B in which the usage gas flow cannot be obtained is not the plurality of successive second periods, as in the period A in which the usage gas flow cannot be obtained, the control unit 2 moves to step S202. In step S202, the control unit 2 obtains the usage gas flow Ff6 of the fuel cell system 20 which is updated just before the period B in which the usage gas flow cannot be obtained. Then, the control unit 2 obtains gas flows Fr7, Fr8, Fr9 which are obtained by the gas flow obtaining unit 1 in the period B in which the usage gas flow cannot be obtained (step S203).

Then, the control unit 2 determines whether or not the usage gas flow Ff6 obtained in step S202 is greater than the gas flows Fr7, Fr8, Fr9 which are obtained in step S203 (step S204). The control unit 2 determines that regarding the period B in which the usage gas flow cannot be obtained, the usage gas flow Ff6 obtained in step S202 is greater than the usage gas flow Fr8 obtained in step S203 (Yes in step S204), and therefore moves to step S206.

When the control unit 2 determines that the gas flow Fr (in this example, gas flow Fr8) obtained by the gas flow obtaining unit 1 is less than the usage gas flow Ff (in this example, usage gas flow Ff6) of the fuel cell system 20 which is updated just before the period in which the usage gas flow cannot be obtained, it can be estimated that the gas flow Fr obtained by the gas flow obtaining unit 1 is the usage gas flow of the fuel cell system 20 (state in which other gas instruments are not consuming the gas), considering that a change in the usage gas flow of the fuel cell system 20 is small. In view of this, the control unit 2 estimates the usage gas flow of the fuel cell system 20 in the period in which the usage gas flow cannot be obtained, from the gas flow Fr (in this example, gas flow Fr8) obtained by the gas flow obtaining unit 1 in the period in which the usage gas flow cannot be obtained, in the manner as described below.

In step S206, the control unit 2 obtains the smallest usage gas flow, of the gas flows obtained by the gas flow obtaining unit 1, in the period B in which the usage gas flow cannot be obtained. Since the gas flow obtained by the gas flow obtaining unit 1 at time T8 is smallest in the period B in which the usage gas flow cannot be obtained, the control unit 2 obtains the gas flow Fr 8.

Then, the control unit 2 calculates a change amount {(Ff8 - Ff6) / (2 × Δt)} between the usage gas flow Ff6 of the fuel cell system 20 which is updated just before the period B in which the usage gas flow cannot be obtained, and the gas flow Fr8 obtained in step S206 (step S207). Then, the control unit 2 updates (calculates) the usage gas flows of the fuel cell system 20 at time T7, time T8 and time T9 based on the usage gas flow Ff6 obtained in step S202 and the change amount calculated in step S207, and terminates the present flow. Specifically, for example, the usage gas flow of the fuel cell system 20 at time T7 is Ff6 + {(Ff8 - Ff6)/ (2 × Δt)} × Δt.

### [Case of period C in which usage gas flow cannot be obtained]

Next, a case of the period C in which the usage gas flow cannot be obtained, in Fig. 6, will be described.

Unlike the periods A, B in which the usage gas flow cannot be obtained, the period C in which the usage gas flow cannot be obtained is the plurality of successive second periods (Yes in step S201), and therefore, the control unit 2 moves to step S209. As shown in Fig. 8(B), in step S209, the control unit 2 obtains the usage gas flow of the fuel cell system 20 which is updated just before the period in which the usage gas flow cannot be obtained. In this case, the control unit 2 obtains the usage gas flow Ff12 of the fuel cell system 20 which is updated just before the period C in which the usage gas flow cannot be obtained.

Then, the control unit 2 obtains the gas flow obtained by the gas flow obtaining unit 1 at a starting point of the period in which the usage gas flow cannot be obtained (step S210). In the period C in which the usage gas flow cannot be obtained, the control unit 2 obtains the gas flow Fr12 obtained by the gas flow obtaining unit 1. Then, the control unit 2 obtains the gas flow obtained by the gas flow obtaining unit 1 at an ending point of the period in which the usage gas flow cannot be obtained (step S211). In the period C in which the usage gas flow cannot be obtained, the control unit 2 obtains the gas flow Fr18 at time T18 which is an ending point of the period C. Then, the control unit 2 calculates a first change amount between the usage gas flow Fr12 obtained in step S210 and the gas flow Fr18 obtained in step S211 (step S212).

Then, the control unit 2 determines whether or not the first change amount calculated in step S212 falls within a predetermined range (step S213). When the control unit 2 determines that the first change amount calculated in step S212 falls within the predetermined range (Yes in step S213), it moves to step S214. On the other hand, when the control unit 2 determines that the first change amount calculated in step S212 falls outside the predetermined range (No in step S213), it moves to step S215.

In the period C in which the usage gas flow cannot be obtained, since the control unit 2 determines that the first change amount falls within the predetermined range (Yes in step S213), it moves to step S214.

As described above, the fuel cell system 20 has a feature that the usage gas flow changes very gradually with time, at the start of its operation, during its operation, and at the end of its operation (see Fig. 3B). Therefore, in the case where the period in which the usage gas flow cannot be obtained is a plurality of successive second periods, and the first change amount in the period in which the usage gas flow cannot be obtained falls within the predetermined range, the control unit 2 can estimate that the first change amount is the change amount of the usage gas flow of the fuel cell system 20. Therefore, the control unit 2 calculates the usage gas flow of the fuel cell system 20 based on the first change amount as described below.

In step S214, the control unit 2 updates (calculates) the usage gas flows of the fuel cell system 20 at time T13 to time T18 based on the usage gas flow Ffl2 obtained in step S209 and the first change amount calculated in step S212, and terminates the present flow. Specifically, for example, the usage gas flow of the fuel cell system 20 at time T13 is Ff12 + {(Ff18 - Ff12)/(6 × Δt)} × Δt.

### [Case of period D in which usage gas flow cannot be obtained]

Next, a description will be given of a case where the first change amount falls outside the predetermined range (No in step S213) and step S215 is performed, with reference to Fig. 7.

Like the period C in which the usage gas flow cannot be obtained, the period D in which the usage gas flow cannot be obtained, of Fig. 7, is the plurality of successive second periods (Yes in step S201), and therefore the control unit 2 moves to step S209. As shown in Fig. 8(B), in step S209, the control unit 2 obtains the usage gas flow Ff34 of the fuel cell system 20 which is updated just before the period D in which the usage gas flow cannot be obtained.

Then, the control unit 2 obtains the gas flow Fr34 obtained by the gas flow obtaining unit 1 at time closest to the period D in which the usage gas flow cannot be obtained (step S210). Then, the control unit 2 obtains the gas flow Fr43 obtained by the gas flow obtaining unit 1 at time T43, which is an ending point of the period D in which the usage gas flow cannot be obtained (step S211). Then, the control unit 2 calculates the first change amount which is a change amount between the usage gas flow Fr34 obtained in step S210 and the gas flow Fr43 obtained in step S211 (step S212).

Regarding the period D in which the usage gas flow cannot be obtained, the control unit 2 determines that the first change amount calculated in step S212 falls outside the predetermined range (No in step S213; see Fig. 7), and therefore moves to step S215.

In step S215, the control unit 2 deems the usage gas flow Ff34 obtained in step S209 as the usage gas flow of the fuel cell system 20 at time T35 to T43, updates the usage gas flow of the fuel cell system 20 at time T35 to T43, and terminates the present flow.

The gas flow detecting device 100 of Embodiment 4 configured as described above can achieve advantages as those of the gas flow detecting device 100 of Embodiment 1.

### [Modified example 1]

Next, modified example of the gas flow detecting device 100 of Embodiment 4 will be described.

In the gas flow detecting device 100 according to modified example 1 of Embodiment 4, the control unit is configured to, when the control unit determines that a usage gas flow of a particular gas instrument cannot be obtained, thereafter determines that the usage gas flow of the particular gas instrument can be obtained, and a usage gas flow (hereinafter will be referred to as deemed usage gas flow) of the particular gas instrument which is updated just before the period in which the usage gas flow cannot be obtained and deemed as the usage gas flow of the particular gas instrument in the period in which the usage gas flow cannot be obtained, is greater than a gas flow obtained by the gas flow obtaining unit, newly set the smallest gas flow of the gas flows obtained by the gas flow obtaining unit in the period in which the usage gas flow cannot be obtained, as the usage gas flow of the particular gas instrument in the period in which the usage gas flow cannot be obtained, calculate a total usage gas flow of the particular gas instrument in the period in which the usage gas flow cannot be obtained, based on the newly set usage gas flow, and calculate the total usage gas flow of the particular gas instrument in a period in which the usage gas flow can be obtained (hereinafter will be referred to as closest period in which the usage gas flow can be obtained), which is closest to the period in which the usage gas flow cannot be obtained, based on the newly set usage gas flow and a change amount of the gas flow obtained by the gas flow obtaining unit, in the closest period in which the usage gas flow can be obtained.

As described above, when the control unit 2 determines that the gas flow Fr obtained by the gas flow obtaining unit 1 is less than the usage gas flow Ff of the fuel cell system 20 which is updated just before the period in which the usage gas flow cannot be obtained, it can estimate that the gas flow Fr obtained by the gas flow obtaining unit 1 is the usage gas flow of the fuel cell system 20 (state in which other gas instruments are not consuming the gas), considering that a change in the usage gas flow of the fuel cell system 20 is small. In view of this, in modified example 1, the control unit 2 estimates the smallest gas flow Fr of the gas flows Fr obtained by the gas flow obtaining unit 1 in the period in which the usage gas flow cannot be obtained, as the usage gas flow of the fuel cell system 20 in the period in which the usage gas flow cannot be obtained (newly sets the usage gas flow of the fuel cell system 20).

Then, the control unit 2 calculates the usage gas flow of the fuel cell system 20 in the period in which the usage gas flow can be obtained (closest period in which the usage gas flow can be obtained), which is closest to the period in which the usage gas flow cannot be obtained, based on the newly set usage gas flow of the fuel cell system 20 and a change amount of the gas flow obtained by the gas flow obtaining unit 1, in the closest period in which the usage gas flow can be obtained.

### [Operation of gas flow detecting device (gas flow detecting method)]

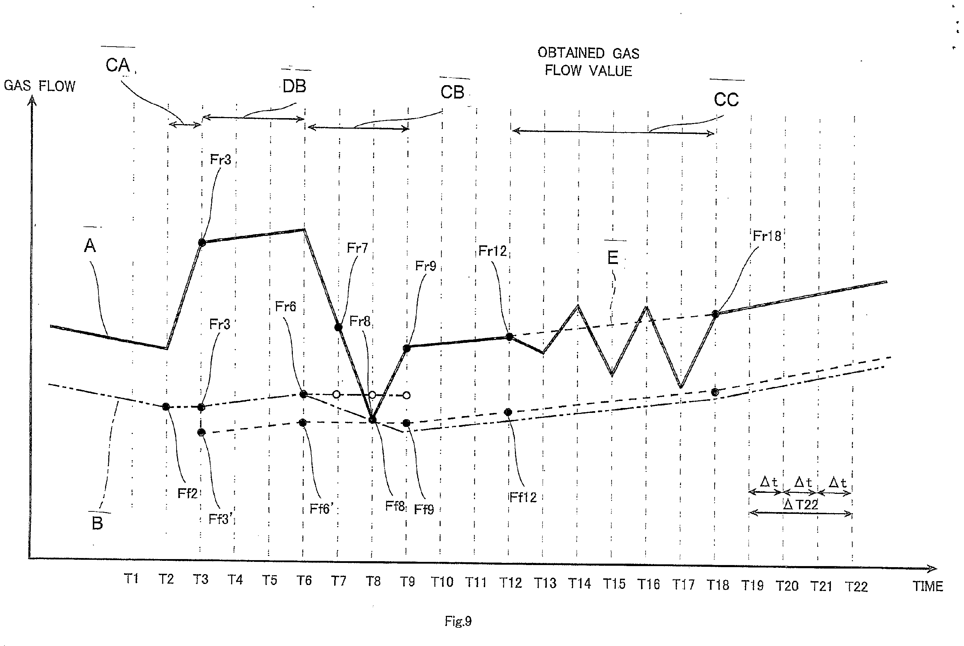

The gas flow detecting device 100 according to modified example 1 has basically the same configuration as that of the gas flow detecting device 100 according to Embodiment 1. Therefore, a detailed description of the gas flow detecting device 100 according to modified example 1 will not be given. The operation (gas flow detecting method) of the gas flow detecting device 100 according to Embodiment 4 is performed as in the flowchart of Fig. 2, and updating of the gas flow in the fuel cell system 20 in step S110 will be described in detail below with reference to Fig. 9 to 10B. Regarding operation described below, a description will be given of the case where the second period ΔT includes a plurality of successive first periods Δt as in Embodiment 1.

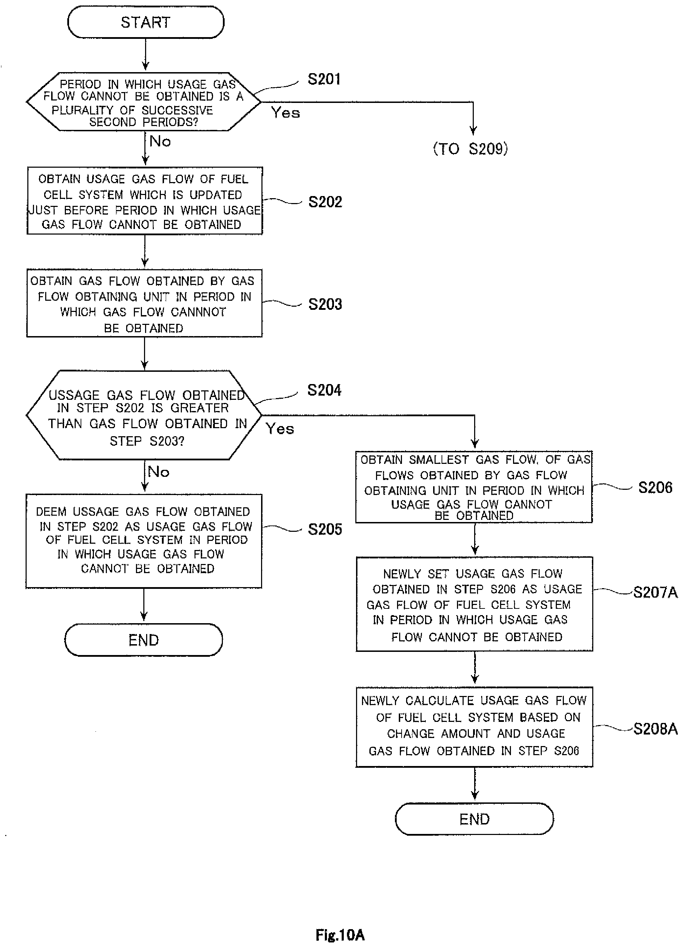

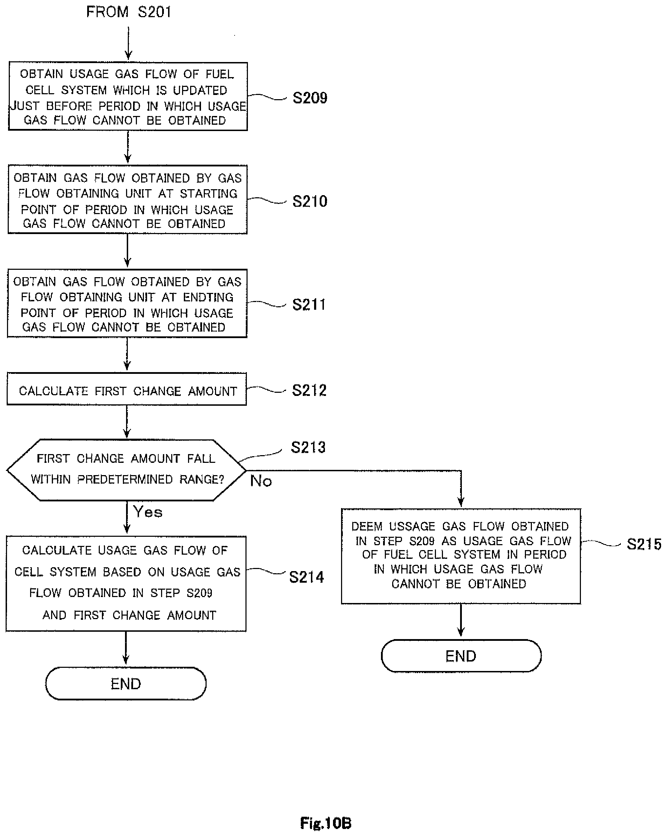

Fig. 9 is a schematic view showing a concept of a gas flow detecting method according to modified example 1 of Embodiment 4. Specifically, Fig. 9 is a graph showing a change in the gas flow obtained by the gas flow obtaining unit, which occurs with time. Figs. 10A and 10B are flowcharts schematically showing detailed updating of the gas flow in the fuel cell system in step S10 in the flowchart of Fig. 2.

In Fig. 9, a solid line indicates the gas flow obtained by the gas flow obtaining unit, and one-dotted line, two-dotted line and broken line indicate the estimated usage gas flows of the fuel cell system, respectively. More specifically, one-dotted line indicates the estimated usage gas flow of the fuel cell system which is calculated by the gas flow detecting method of Embodiment 1, and two-dotted line indicates the estimated usage gas flow of the fuel cell system which is newly calculated by the gas flow detecting method of Embodiment 1 to Embodiment 3. Also, broken line indicates the estimated usage gas flow of the fuel cell system which is newly calculated by the gas flow detecting method according to modified example 1.

The obtained gas flow values of Fig. 9 are the same as those of Fig. 6. Likewise, the usage gas flows of the fuel cell system indicated by one-dotted line and two-dotted line of Fig. 9 are the same as those of Fig. 6.

As shown in Fig. 9, the basic operation of the gas flow detecting method of modified example 1 is the same as that of the gas flow detecting method of Embodiment 4, but is different from the gas flow detecting method of Embodiment 4 in that the calculation method of the usage gas flow of the fuel cell system 20 in the period B in which the usage gas flow cannot be obtained, and the calculation method of the usage gas flow of the fuel cell system 20 in the closest period B in which the usage gas flow can be obtained, which is closest to the period B in which the usage gas flow cannot be obtained.

It should be noted that the usage gas flow of the fuel cell system 20 in the period B in which the usage gas flow cannot be obtained is different from that of Embodiment 4. Therefore, the usage gas flow of the fuel cell system 20 after the period B in which the usage gas flow cannot be obtained, is deviated from the usage gas flow of the fuel cell system 20 calculated by the gas flow detecting method of Embodiment 4.

As shown in Fig. 10A, in the gas flow detecting method of modified example 1, step S207A and step S208A are performed in place of step S207 and step S208 of the gas flow detecting method of Embodiment 4.

Hereinafter, the gas flow detecting method of modified example 1 will be described specifically.

### [Case of period B in which usage gas flow cannot be obtained]

Firstly, a case of the period B in which the usage gas flow cannot be obtained, in Fig. 9, will be described, with reference to Fig. 10A.

As described above, regarding the period B in which the usage gas flow cannot be obtained, the usage gas flow Ff6 obtained in step S202 is greater than the gas flow Fr8 obtained in step S203 (Yes in step S204), and therefore the control unit 2 moves to step S206.

In step S206, the control unit 2 obtains the smallest gas flow, of the gas flows obtained by the gas flow obtaining unit 1, in the period B in which the usage gas flow cannot be obtained. Since the gas flow obtained by the gas flow obtaining unit 1 at time T8 is smallest in the period B in which the usage gas flow cannot be obtained, the control unit 2 obtains the gas flow Fr 8.

Then, the control unit 2 newly sets the gas flow Fr8 obtained in step S206 as the usage gas flow of the fuel cell system 20 in the period B in which the usage gas flow cannot be obtained (step S207A). In other words, the control unit 2 newly sets the usage gas flow of the fuel cell system 20 in the period from time T6 to time T8, assuming that the gas flow Fr8 is the usage gas flows Ff6', Ff7' and Ff8.

### [Case of closest period B in which usage gas flow can be obtained]

Next, a description will be given of calculation of the usage gas flow of the fuel cell system 20 in the closest period in which the usage gas flow can be obtained, in a case where the usage gas flow of the fuel cell system 20 is newly set in the period in which the usage gas flow cannot be obtained, i.e., step S208A of Fig. 10A.

In step S208A, the control unit 2 newly calculates the usage gas flow of the fuel cell system 20 in the closest period B in which the usage gas flow can be obtained, based on the gas flow obtained in step S206 and a change amount of the gas flow in the closest period B in which the usage gas flow can be obtained, and terminates the present flowchart.

Specifically, the control unit 2 calculates the change amount of the gas flow in the closest period B in which the usage gas flow can be obtained, based on the gas flow Fr3 obtained by the gas flow obtaining unit 1 at time T3 and the gas flow Fr6 obtained by the gas flow obtaining unit 1 at time T6. Then, the control unit 2 newly calculates the usage gas flow of the fuel cell system 20 in the closest period B in which the usage gas flow can be obtained, based on the calculated change amount of the gas flow and the gas flow (in this example, gas flow Fr8 (usage gas flow Ff6')) obtained in step S206.

Then, the control unit 2 updates the total usage gas flow of the fuel cell system 20 based on the usage gas flows (usage gas flows Ff6', Ff7', and Ff8) of the fuel cell system 20 in the period B in which the usage gas flow cannot be obtained, which are newly set in step S207A, and the usage gas flows (usage gas flows Ff3', Ff4', and Ff5') of the fuel cell system 20 in the closest period B in which the usage gas flow can be obtained, which are calculated in step S208A (step S111 of Fig. 2).

The gas flow detecting device 100 of modified example 1 configured as described above can achieve advantages as those of the gas flow detecting device 100 of Embodiment 4.

Although in modified example 1, the method of newly calculating the usage gas flow of the fuel cell system 20 has been described regarding the case where the closest period in which the usage gas flow can be obtained is a second period, this can also be performed when the closest period in which the usage gas flow can be obtained is a plurality of successive second periods, as in the case where the closest period is a second period.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of conveying out the invention.

### Industrial Applicability

A gas flow detecting device and a gas flow detecting method of the present invention are capable of calculating (detecting) a usage gas flow (total usage gas flow) of a particular gas instrument, and therefore are effectively applicable to a gas meter or the like.

### Abbreviations

In the drawings the abbreviations mean:
- A: obtained gas flow value
- B: estimated usage gas flow of fuel cell system
- C: period in which usage gas flow cannot be obtained
- CA: period A in which usage gas flow cannot be obtained
- CB: period B in which usage gas flow cannot be obtained
- CC: period C in which usage gas flow cannot be obtained
- CD: period D in which usage gas flow cannot be obtained
- DB: closest period B in which usage gas flow can be obtained
- E: first change amount

### Reference Signs List

- 1: gas flow obtaining unit
- 2: control unit
- 10: gas supply source
- 20: fuel cell system
- 30: fan heater
- 40: gas range
- 50: gas supply pipe
- 100: gas flow detecting device

## Claims

1. A gas flow rate detecting method comprising the steps of:
determining (S102) in each of a plurality of successive second period intervals (ΔT), whether or not a particular gas instrument (20) is activated, based on a gas flow rate obtained by a gas flow rate obtaining unit (1) in each of a plurality of successive first period intervals (Δt), wherein each of the plurality of second period intervals (ΔT) includes the plurality of first period intervals (Δt);
in a case where it is determined that the particular gas instrument (20) is activated in a certain second period interval (ΔT), then calculating a total usage gas flow rate of the particular gas instrument (2), which is an integrated value of a usage gas flow rate of the particular gas instrument (20), based on the gas flow rate obtained by the gas flow rate obtaining unit (1), within the certain second period interval (ΔT), as to which it is determined that the particular gas instrument (20) is activated, based on a change amount of the gas flow rate obtained by the gas flow rate obtaining unit (1) within the certain second period interval (ΔT) in which the particular gas instrument (20) is activated, and a usage gas flow rate of the particular gas instrument (20) which is updated just before the certain second period interval (ΔT) in which the particular gas instrument (20) is activated and setting a counter to 0 (S107);
in a case where it is determined that the particular gas instrument (20) is not activated (S103) in the certain second period interval (ΔT),
then non-updating the usage gas flow rate of the particular gas instrument (20) within the certain second period interval (ΔT) in which the particular gas instrument (20) is not activated and adding 1 to the counter (S108), until it is determined that the particular gas instrument (20) is activated; and
after determining that the particular gas instrument (20) is activated again (S103), then calculating a total usage gas flow rate of the particular gas instrument (20) in a certain second period interval (ΔT) in which particular gas instrument (20) is not activated, as to which it is determined that the particular gas instrument (20) is not activated, by deeming the usage gas flow rate of the particular gas instrument (20) which is updated just before it is determined that the particular gas instrument (20) is not activated, as the usage gas flow rate of the particular gas instrument (20) within the certain second period interval (ΔT) in which the particular gas instrument (20) is not activated.

2. The gas flow rate detecting method according to claim 1, wherein the particular gas instrument (20) is a fuel cell system.

3. A gas flow rate detecting device (100) attached to a gas supply pipe (50), the gas flow rate detecting device (100) comprising:
a control unit (2) performing the method according to claim 1 or 2, and the gas flow rate obtaining unit (1).

## Patentansprüche

1. Gasströmungsraten-Erfassungsverfahren, umfassend die folgenden Schritte:
Bestimmen (S102) in jedem von einer Vielzahl von aufeinanderfolgenden zweiten Periodenintervallen (ΔT), ob ein bestimmtes Gasinstrument (20) aktiviert ist oder nicht, basierend auf einer Gasströmungsrate, die durch eine Gasströmungsraten-Erhaltungseinheit (1) in jedem von einer Vielzahl von aufeinanderfolgenden ersten Periodenintervallen (Δt) erhalten wird, wobei jedes der Vielzahl von zweiten Periodenintervallen (ΔT) die Vielzahl von ersten Periodenintervallen (Δt) beinhaltet;
in einem Fall, in dem bestimmt ist, dass das bestimmte Gasinstrument (20) in einem bestimmten zweiten Periodenintervall (ΔT) aktiviert ist,
dann Berechnen einer Gesamtnutzungs-Gasströmungsrate des bestimmten Gasinstruments (2), die ein integrierter Wert einer Nutzungsgasströmungsrate des bestimmten Gasinstruments (20) ist, basierend auf der Gasströmungsrate, die durch die Gasströmungsraten-Erhaltungseinheit (1) erhalten wird, in dem bestimmten zweiten Periodenintervall (ΔT), hinsichtlich derer bestimmt wird, dass das bestimmte Gasinstrument (20) aktiviert ist, basierend auf einem Änderungsbetrag der Gasströmungsrate, die durch die Gasströmungsraten-Erhaltungseinheit (1) erhalten wird, in dem bestimmten zweiten Periodenintervall (ΔT), in dem das bestimmte Gasinstrument (20) aktiviert ist, und einer Nutzungsgasströmungsrate des bestimmten Gasinstruments (20), das kurz vor dem bestimmten zweiten Periodenintervall (ΔT) aktualisiert wird, in dem das bestimmte Gasinstrument (20) aktiviert ist, und Einstellen eines Zählers auf 0 (S107);
in einem Fall, in dem bestimmt ist, dass das bestimmte Gasinstrument (20) in dem bestimmten zweiten Periodenintervall (ΔT) nicht aktiviert ist (S103),
dann Nicht-Aktualisieren der Nutzungsgasströmungsrate des bestimmten Gasinstruments (20) in dem bestimmten zweiten Periodenintervall (ΔT), in dem das bestimmte Gasinstrument (20) nicht aktiviert ist, und Hinzufügen von 1 zu dem Zähler (S108), bis bestimmt ist, dass das bestimmte Gasinstrument (20) aktiviert ist; und
nach dem Bestimmen, dass das bestimmte Gasinstrument (20) wieder aktiviert ist (S103), dann Berechnen einer Gesamtnutzungs-Gasströmungsrate des bestimmten Gasinstruments (20) in einem bestimmten zweiten Periodenintervall (ΔT), in dem das bestimmte Gasinstrument (20) nicht aktiviert ist, hinsichtlich derer bestimmt wird, dass das bestimmte Gasinstrument (20) nicht aktiviert ist, durch Ansehen der Nutzungsgasströmungsrate des bestimmten Gasinstruments (20), das aktualisiert wird, kurz bevor bestimmt wird, dass das bestimmte Gasinstrument (20) nicht aktiviert ist, als die Nutzungsgasströmungsrate des bestimmten Gasinstruments (20) in dem bestimmten zweiten Periodenintervall (ΔT), in dem das bestimmte Gasinstrument (20) nicht aktiviert ist.

2. Gasströmungsraten-Erfassungsverfahren nach Anspruch 1, wobei das bestimmte Gasinstrument (20) ein Brennstoffzellensystem ist.

3. Gasströmungsraten-Erfassungsvorrichtung (100), die an einem Gaszuführrohr (50) angebracht ist, wobei die Gasströmungsraten-Erfassungsvorrichtung (100) Folgendes umfasst:
eine Steuereinheit (2), die das Verfahren nach Anspruch 1 oder 2 durchführt, und die Gasströmungsraten-Erhaltungseinheit (1).

## Revendications

1. Procédé de détection de débit de gaz, comprenant les étapes de :
la détermination (S 102), dans chacun d'une pluralité de seconds intervalles de période successifs (ΔT), qu'un instrument de gaz particulier (20) est activé ou non, sur la base d'un débit de gaz obtenu par une unité d'obtention de débit de gaz (1) dans chacun d'une pluralité de premiers intervalles de période successifs (Δt), dans lequel chacun de la pluralité de seconds intervalles de période (ΔT) inclut la pluralité de premiers intervalles de période (Δt) ;
au cas où il est déterminé que l'instrument de gaz particulier (20) est activé dans un certain second intervalle de période (ΔT),
puis le calcul d'un débit de gaz d'usage total de l'instrument de gaz particulier (2), qui est une valeur intégrée d'un débit de gaz d'usage de l'instrument de gaz particulier (20), sur la base du débit de gaz obtenu par l'unité d'obtention de débit de gaz (1), au sein du certain second intervalle de période (ΔT), pour lequel il est déterminé que l'instrument de gaz particulier (20) est activé, sur la base d'une quantité de changement du débit de gaz obtenu par l'unité d'obtention de débit de gaz (1) au sein du certain second intervalle de période (ΔT) dans lequel l'instrument de gaz particulier (20) est activé, et d'un débit de gaz d'usage de l'instrument de gaz particulier (20) qui est actualisé juste avant le certain second intervalle de période (ΔT) dans lequel l'instrument de gaz particulier (20) est activé et le réglage d'un compteur à 0 (S107) ;
au cas où il est déterminé que l'instrument de gaz particulier (20) n'est pas activé (S103) dans le certain second intervalle de période (ΔT),
puis la non-actualisation du débit de gaz d'usage de l'instrument de gaz particulier (20) au sein du certain second intervalle de période (ΔT) dans lequel l'instrument de gaz particulier (20) n'est pas activé et l'addition d'1 au compteur (S108), jusqu'à ce qu'il soit déterminé que l'instrument de gaz particulier (20) est activé ; et
après la détermination que l'instrument de gaz particulier (20) est activé à nouveau (S103), puis le calcul d'un débit de gaz d'usage total de l'instrument de gaz particulier (20) dans un certain second intervalle de période (ΔT) dans lequel l'instrument de gaz particulier (20) n'est pas activé, pour lequel il est déterminé que l'instrument de gaz particulier (20) n'est pas activé, en considérant le débit de gaz d'usage de l'instrument de gaz particulier (20), qui est actualisé juste avant qu'il soit déterminé que l'instrument de gaz particulier (20) n'est pas activé, en tant que débit de gaz d'usage de l'instrument de gaz particulier (20) au sein du certain second intervalle de période (ΔT) dans lequel l'instrument de gaz particulier (20) n'est pas activé.

2. Procédé de détection de débit de gaz selon la revendication 1, dans lequel l'instrument de gaz particulier (20) est un système à pile à combustible.

3. Dispositif de détection de débit de gaz (100) attaché à un tuyau d'alimentation en gaz (50), le dispositif de détection de débit de gaz (100) comprenant :
une unité de commande (2) réalisant le procédé selon la revendication 1 ou 2 et l'unité d'obtention de débit de gaz (1).
